Europäisches Patentamt

European Patent Office

Office européen des brevets

(11) Veröffentlichungsnummer: **0 356 441**
**B1**

# EUROPÄISCHE PATENTSCHRIFT

(45) Veröffentlichungstag der Patentschrift: 06.02.91

(21) Anmeldenummer: 88902844.5

(22) Anmeldetag: 26.03.88

(86) Internationale Anmeldenummer:
PCT/EP88/00254

(87) Internationale Veröffentlichungsnummer:
WO 88/08086 20.10.88 Gazette 88/23

(51) Int. Cl.⁵: **F 15 B 13/02,** G 05 D 16/10

(54) **HYDRAULISCHE DRUCKREGELEINRICHTUNG, INSBESONDERE FÜR LASTSCHALTGETRIEBE VON KRAFTFAHRZEUGEN.**

(30) Priorität: 04.04.87 DE 3711492

(43) Veröffentlichungstag der Anmeldung:
07.03.90 Patentblatt 90/10

(45) Bekanntmachung des Hinweises auf die Patenterteilung:
06.02.91 Patentblatt 91/06

(84) Benannte Vertragsstaaten:
DE FR GB

(56) Entgegenhaltungen:
EP-A-0 090 129
EP-A-0 164 741
DE-B-2 557 585
FR-A-1 449 526
US-A-4 034 563

(73) Patentinhaber: ZAHNRADFABRIK FRIEDRICHSHAFEN AKTIENGESELLSCHAFT
Löwentaler Strasse 100 Postfach 2520
D-7990 Friedrichshafen 1 (DE)

(72) Erfinder: LÖFFLER, Alfons
Ulmenweg 51
D-7990 Friedrichshafen 1 (DE)
Erfinder: MARTE, Walter
Eugen-Bolz-Straase 42
D-7991 Oberteuringen (DE)
Erfinder: WIGGERMANN, Peter
Dorfstrasse 12
D-7994 Oberdorf (DE)

EP 0 356 441 B1

**Beschreibung**

Die Erfindung betrifft eine hydraulische Druckregeleinrichtung, insbesondere für Lastschaltgetriebe von Kraftfahrzeugen, nach dem Oberbegriff des Anspruches 1 bzw. 3.

Eine derartige Druckregeleinrichtung ist bekannt aus der DE—B—2 557 585. In dieser Druckregeleinrichtung dient ein Hauptdruckventil dazu, einen bestimmten Hauptdruck zu erzeugen für die Betätigung von Schaltelementen, wie Kupplungen und Bremsen. Bei Lastschaltgetrieben wird der Drehmomentwandler bei höheren Geschwindigkeiten durch eine Wandlerkupplung überbrückt. Bei geöffneter Wandlerkupplung ist der Hauptdruck hoch, damit die durch den Drehmomentwandler bewirkten höheren Momente beim Gasgeben von den Kupplungen übertragen werden können. Ist in diesem Betriebszustand die Pumpendrehzahl — beispielsweise bei stehendem Fahrzeug und bei niedrigen Fahrgeschwindigkeiten und niedrigen Motordrehzahlen (Leerlaufdrehzahl) — niedrig, so sind die Leckverluste am Hochdruck-Verbraucher relativ zur Pumpenfördermenge hoch. Dadurch werden die an die Ablaufleitung des Hauptdruckventiles angeschlossenen Niederdruck-Verbraucher, wie beispielsweise der Drehmomentwandler und ein daran angeschlossener Schmierkreislauf, mit einer entsprechend geringeren Druckmittelmenge versorgt.

Der Erfindung liegt die Aufgabe zugrunde, die bekannte Druckregeleinrichtung dahingehend zu verbessern, daß die in dem genannten Betriebszustand bei niedrigen Antriebsdrehzahlen der Druckmittelpumpe auftretenden Leckverluste am Hochdruck-Verbrancher verringert werden.

Diese Aufgabe wird durch die im Anspruch 1 bzw. 3 gekennzeichnete hydraulische Druckregeleinrichtung gelöst. Vorteilhafte und zweckmäßige Ausgestaltungen sind in den Unteransprüchen angegeben.

Durch die Parallelschaltung eines zweiten Druckbegrenzungsventils zu dem Hauptdruckventil und durch eine nachgeschaltete Drosselstelle wird beider ersten Erfindung erreicht, daß sich bei niedrigen Antriebsdrehzahlen und damit einem geringen Druckmittelstrom ein relativ nedriger Arbeitsdruck einstellt. Über das zweite Druckbegrenzungsventil fließt ein ausreichend großer Druckmittelstrom zu dem Schmierkreislauf. Der an den Schaltelementen anstehende Druck ist relativ niedrig, so daß die Leckverluste ebenfalls niedrig gehalten werden können. Durch die nachgeschaltete Drosselstelle wird erreicht, daß sich bei steigenden Antriebsdrehzahlen der Druckmittelpumpe und damit größer werdendem Druckmittelstrom auch der Arbeitsdruck auf ein für die Betätigung der Schaltelemente erforderliches Niveau einstellt.

Beider zweiten Erfindung wirken durch die Parallelschaltung der Druckfedern des Hauptdruckventils und des zweiten Druckbegrenzungsventils im entsprechenden Betriebszustand beide Druckfedern auf einen Ventilkolben, der die Funktionen des Hauptdruckventils und des zweiten Druckbegrenzungsventils trägt. Die eigentliche Hauptdruckventil-Druckfeder kann deshalb verkleinert werden.

Die Druckfeder mit der größeren Vorspannkraft ist gefesselt, das heißt, sie ist in ihrer Ausdehnung begrezt. Dadurch kann der gemeinsame Ventilkolben zwei unterschiedliche Druckhöhen mit stufenlosem Übergang anregln. Durch die Parallelschaltung und Ineinanderschachtelung der beiden Druckfedern des Hauptdruckventiles und des zweiten Druckbegrenzungsventiles ergibt sich ein einfacher und raumsparender Aufbau der Druckregeleinrichtung.

Die zwei Erfindungen werden im folgenden anhand zweier in der Zeichnung dargestellter Ausführungsbeispiele näher erläutert. Es zeigt:

Fig. 1 eine prinzipielle Darstellung der Druckregeleinrichtung des ersten Ausführungsbeispieles mit der Schaltungsanordnung des Hauptdruckventils und des parallel geschalteten zweiten Druckbegrenzungsventils,

Fig. 2 eine prinzipielle Darstellung der Druckregeleinrichtung des zweiten Ausführungsbeispieles mit der Schaltungsanordnung nach Fig. 1, jedoch mit in dem Hauptdruckventil integrierter Funktion des zweiten Druckbegrenzungsventils,

Fig. 3 eine konstruktive Ausführungsform der Druckregeleinrichtung nach Fig. 2.

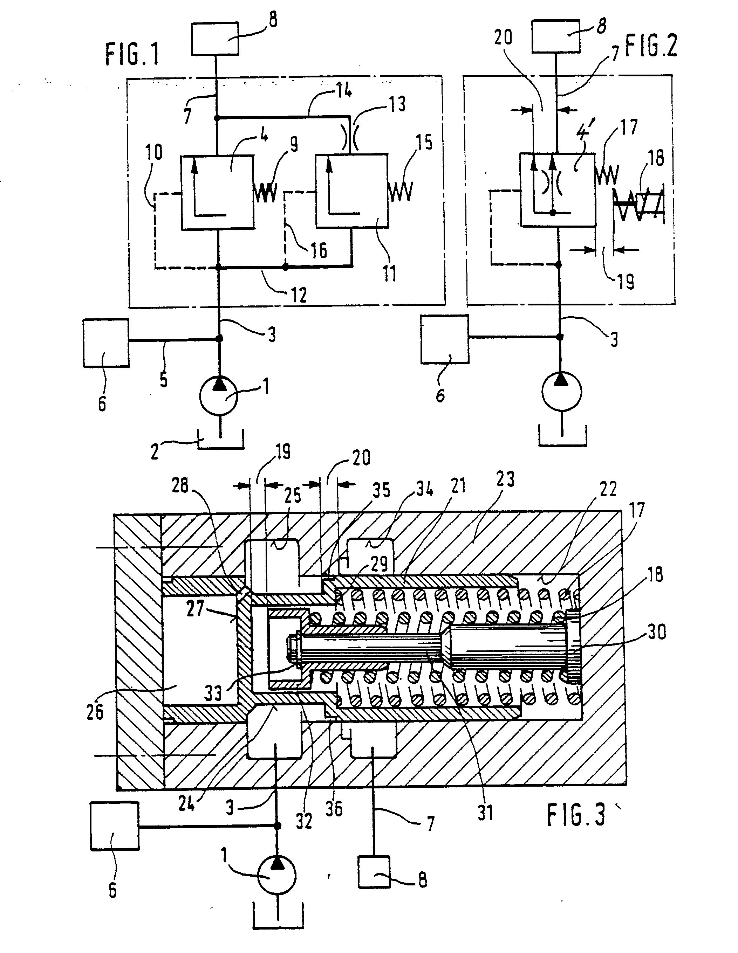

Die hydraulische Druckregeleinrichtung nach Fig. 1 enthält eine Druckmittelpumpe 1, die aus einem Behälter 2 Druckmittel ansaugt und in eine Druckleitung 3 fördert. An die Druckleitung 3 ist ein Hauptdruckventil 4 angeschlossen. Von der Druckleitung 3 zweigt eine Hauptdruckleitung 5 ab, die zu einem Hochdruck-Verbraucher 6 führt. Der Hockdruck-Verbraucher besteht beispielsweise aus mehreren Schaltelementen, die als Kupplungen und/oder Bremsen eines Lastschaltgetriebes eines Kraftfahrzeuges ausgeführt sind. Von dem Hauptdruckventil 4 führt eine Ablaufleitung 7 zu einem Niederdruck-Verbraucher 8, der beispielsweise durch einen dargestellten Drehmomentwandler und einen Schmierkreislauf des Lastschaltgetriebes gebildet ist.

Das Hauptdruckventil 4 ist als Druckbegrenzungsventil ausgebildet und wird durch eine Druckfeder 9 in Schließrichtung und über eine Steuerleitung 10 durch den in der Druckleitung 3 herrschenden Druck in Öffnungsrichtung beaufschlagt.

Ein zweites Druckbegrenzungsventil 11 ist zu dem Hauptdruckventil 4 parallel geschaltet. Die Eingangsseite des zweiten Druckbegrenzungsventiles 11 ist über eine Zweigleitung 12 mit der Druckleitung 3 verbunden. Die Ablaufseite des zweiten Druckbegrenzungsventiles 11 ist über eine Drosselstelle 13 und eine Verbindungsleitung 14 mit der Ablaufleitung 7 verbunden. Das zweite Druckbegrenzungsventil 11 ist wie das Hauptdruckventil 4 durch eine Druckfeder 15 in Schließrichtung und über eine Steuerleitung 16 durch den in der Druckleitung 3 herrschenden Druck in Öffnungsrichtung beaufschlagt.

Die Federkraft der Druckfeder 15 ist kleiner als die Federkraft der Druckfeder 9, so daß der Öffnungsdruck des zweiten Druckbegrenzungsventiles 11 beispielsweise bei 8 bar und der Öffnungsdruck des Hauptdruckventiles 4 beispielsweise bei 18 bar liegt.

Fig. 2 zeigt eine schematische Darstellung des zweiten Ausführungsbeispieles der hydraulischen Druckregeleinrichtung, bei der die Funktion des zweiten Druckbegrenzungsventiles in dem Hauptdruckventil integriert ist. Bei dieser Ausführung sind einem Druckventil 4' zwei parallel zueinander angeordnet Druckfedern 17 und 18 zugeordnet. Die Druckfeder 17 ist mit einer kleineren Federkraft ausgelegt als dir Druckfeder 18. Dabei wirkt die Druckfeder 17 sowohl für den niederen als auch für den hohen Druckbereich. Die Druckfeder 18 mit der höheren Federkraft ist gefesselt. Dies bedeutet, daß die Druckfeder 18 in ihrer Ausdehnung begrenzt ist und erst dann zur Wirkung kommt, wenn das Ventil um einen bestimmten Ventilweg 19 verstellt ist. Der Ventilweg 19 ist dabei kleiner als der Verstellweg 20 des Ventiles bis zur Öffnung einer ungedrosselten Verbindung zwischen der Druckleitung 3 und der Ablaufleitung 7. Das Öffnen einer solchen ungedrosselten Verbindung entspricht dem Öffnen des Hauptdruckventiles 4 aus dem Ausführungsbeispiel nach Fig. 1.

Fig. 3 zeigt eine konstruktive Ausführungsform der hydraulischen Druckregeleinrichtung, bei der die Funktion des zweiten Druckbegrenzungsventiles in dem Hauptdruckventil integriert ist. Ein Ventilkolben 21 ist in einer Ventilbohrung 22 eines Ventilgehäuses 23 verschiebbar angeordnet und weist eine Kolbennut 24 auf. Die Kolbennut 24 steht über eine in dem Ventilgehäuse 23 angeordnete Gehäuseringnut 25 in ständiger Verbindung mit der Druckleitung 3. Ein Kolbenraum 26, der an seiner offenen Seite durch die in Fig. 3 linke Stirnseite 27 des Ventilkolbens 21 begrenzt wird, steht über eine Bohrung 28 in ständiger Verbindung mit der Kolbennut 24. Zwischen der in Fig. 3 rechten Stirnseite 29 des Ventilkolbens 21 und dem Ventilgehäuse 23 ist die Druckfeder 17 unter Vorspannung eingesetzt.

Die Druckfeder 18 ist innerhalb der Druckfeder 17 in der Ventilbohrung 22 auf der rechten Seite des Ventilkolbens 21 gefesselt axial frei beweglich eingesetzt. Die Druckfeder 18 stützt sich dabei einerseits an einem Bund 30 eines Kolbens 31 ab. Auf der anderen Seite stützt sich die Druckfeder 18 an einer Büchse 32 ab, die auf dem Kolben 31 verschiebbar angeordnet ist und deren Bewegung durch einen an dem freien Ende des Kolbens 31 angeordneten Anschlag in der Form eines Sprengringes 33 begrenzt ist.

Neben der Gehäuseringnut 25 ist eine weitere Gehäuseringnut 34, die in ständiger Verbindung mit der Ablaufleitung 7 zu dem Niederdruck-Verbraucher 8 steht. An dem Ventilkolben 21 ist anschließend an die Kolbennut 24 eine Drosselstufe 35 angeordnet, die zusammen mit der Ventilbohrung 22 einen Ringspalt 36 bildet. Der Ringspalt 36 stellt die konstruktive Ausführung für die Drosselstelle 13 aus Fig. 1 dar.

In der Ausgangsstellung des Ventilkolbens 21, die durch die Druckfeder 17 eingestellt ist, ist der Durchfluß von der Gehäuseringnut 25 zu der Gehäuseringnut 34 gesperrt. Zwischen dem Ventilkolben 21 und der Büchse 32 besteht in axialer Richtung ein Abstand, der dem Ventilweg 19 entspricht. Der Abstand zwischen der linken Steuerkante der Gehäuseringnut 34 und der linken Kante der Drosselstufe 34 entspricht dem Verstellweg 20 der Fig. 2.

Im folgenden wird die Funktion der hydraulischen Druckregeleinrichtung anhand des Ausführungsbeispieles der Fig. 3 in Verbindung mit Fig. 1 beschrieben. Wird die Druckmittelpumpe 1 mit einer relativ niedrigen Drehzahl, beispielsweise der Leerlaufdrehzahl eines Fahrzeugmotors, angetrieben, so wird der in der Druckleitung 3 entstehende Druck durch das zweite Druckbegrenzungsventil 11 auf einen bestimmten niedrigen Wert, beispielsweise 8 bar, begrenzt. Das zweite Druckbegrenzungsventil 11 wird hierbei gebildet durch den Ventilkolben 21 mit der Drosselstufe 35 in Verbindung mit der Ventilbohrung 22, der Gehäuseringnut 34 und der Druckfeder 17. Wird dieser untere Grenzdruck in der Druckleitung 3 erreicht, so wird der Ventilkolben 21 durch den auf die linke Stirnfläche 27 wirkenden Druck entgegen der Kraft der Druckfeder 17 nach rechts verschoben, bis die Drosselstufe 35 in den Bereich der gehäuseringnut 34 gelangt. Dadurch entsteht eine offene Drosselstelle in der Form des Ringspaltes 36, d. h., das zweite Druckbegrenzungsventil 11 aus Fig. 1 ist geöffnet.

Mit steigender Antriebsdrehzahl der Druckmittelpumpe 1 erhöht sich wegen der Drosselwirkung des Ringspaltes 36 der Druck in der Druckleitung 3. Der Ventilkolben 21 wird so weit weiter nach rechts verschoben, bis er zur Anlage an die Büchse 32 kommt. An diesem nach Überwindung des Ventilweges 19 erreichten Verstellpunkt des Ventilkolbens 21 beginnt die Druckfeder 18 auf den Ventilkolben 21 zur wirken und bestimmt den oberen Grenzwert des Arbeitsdruckes in Verbindung mit der Druckfeder 17. Wird der obere Grenzwert des Arbeitsdruckes, beispielsweise 18 bar, überschritten, so wird der Ventilkolben 21 gegen die Kraft der beiden Druckfedern 17 und 18 weiter nach rechts verschoben, bis ein ungedrosselter Durchfluß von der Gehäuseringnut 25 über die Kolbennut 24 zu der Gehäuseringnut 34 geöffnet wird. Dieser ungedrosselte Durchflußkanal stellt den offenen Durchgangskanal des Hauptdruckventiles dar.

Durch die Kombination des Hauptdruckventiles und des zweiten Druckbegrenzungsventils ist eine Druckabsenkung bei Leerlaufdrehzahlen der Druckmittelpumpe 1 zur Verringerung der Leckverluste an den Kupplungen bzw. Bremsen des Hochdruck-Verbrauchers 6 möglich. Dadurch erfolgt außerdem eine Verringerung der Reibverluste und Durchtriebsverluste, beispielsweise an Kolbenringen des Hochdruck-Verbrauchers. Dadurch kann auch bei niedrigen Drehzahlen der Niederdruck-Verbraucher 8 mit einer größeren Druckmittelmenge versorgt werden.

Bezugszeichen
1 Druckmittelpumpe
2 Behälter
3 Druckleitung
4 Hauptdruckventil
5 Hauptdruckleitung
6 Hochdruck-Verbraucher
7 Ablaufleitung
8 Niederdruck-Verbraucher
9 Druckfeder
10 Steuerleitung
11 zweites Druckbegrenzungsventil
12 Zweigleitung
13 Drosselstelle
14 Verbindungsleitung
15 Druckfeder
16 Steuerleitung
17 Druckfeder
18 Druckfeder
19 Ventilweg
20 Verstellweg
21 Ventilkolben
22 Ventilbohrung
23 Ventilgehäuse
24 Kolbennut
25 Gehäuseringnut
26 Kolbenraum
27 Stirnseite
28 Bohrung
29 Stirnseite
30 Bund
31 Kolben
32 Büchse
33 Sprengring
34 Gehäuseringnut
35 Drosselstufe
36 Ringspalt

**Patentansprüche**

1. Hydraulische Druckregeleinrichtung, insbesondere für Lastschaltgetriebe von Kraftfahrzeugen, mit einer Druckmittelpumpe (1) und einem Hauptdruckventil (4) für die Druckregelung in wenigstens einem an eine Druckleitung (3) zwischen der Druckmittelpumpe (1) und dem Hauptdruckventil (4) angeschlossenen Hochdruck-Verbraucher (6), wobei das als Druckbegrenzungsventil ausgebildete Hauptdruckventil (4) in Schließrichtung durch eine Druckfeder (9) und in Öffnungsrichtung durch den in der Druckleitung (3) herrschenden Druck beaufschlagt ist und wobei das Hauptdruckventil (4) eine Ablaufleitung (7) zu wenigstens einem Niederdruck-Verbraucher (8) aufweist, dadurch gekennzeichnet,
— daß zu dem Hauptdruckventil (4) ein zweites Druckbegrenzungsventil (11) parallel geschaltet ist,
— daß dem zweiten Druckbegrenzungsventil (11) eine Drosselstelle (13) nachgeschaltet ist,
— daß das zweite Druckbegrenzungsventil (11) in Schließrichtung durch eine Druckfeder (15) und in Öffnungsrichtung durch den in der Druckleitung (3) herrschenden Druck beaufschlagt ist und
— daß der Öffnungsdruck des zweiten Druckbegrenzungsventils (11) unter dem Öffnungsdruck des Hauptdruckventiles (4) liegt (Fig. 1).

2. Druckregeleinrichtung nach Anspruch 1, dadurch gekennzeichnet, daß die Druckfeder (9) des Hauptdruckventiles (4) eine größere Federkraft aufweist als die Druckfeder (15) des zweiten Druckbegrenzungsventils (11).

3. Hydraulische Druckregeleinrichtung, insbesondere für Lastschaltgetriebe von Kraftfahrzeugen, mit einer Druckmittelpumpe (1) und einem Druckventil (41) für die Druckregelung in wenigstens einem an eine Druckleitung (3) zwischen der Druckmittelpumpe (1) und dem Druckventil angeschlossenen Hochdruck-Verbraucher (6), wobei das als Druckbegrenzungsventil ausgebildete Druckventil in Schließrichtung durch eine Druckfeder (17) und in Öffnungsrichtung durch den in der Druckleitung (3) herrschenden Druck beaufschlagt ist und wobei das Druckventil eine Ablaufleitung (7) zu wenigstens einem Niederdruck-Verbraucher (8) aufweist, dadurch gekennzeichnet,
— daß ein in einer Ventilbohrung (22) eines Ventilgehäuses (23) verschiebbarer Ventilkolben (21) zur Aufsteuerung eines durch eine Drosselstelle (35, 36) gedrosselten und eines ungedrosselten Durchganges zwischen der Druckleitung (3) und der Ablaufleitung (7) ausgebildet ist,
— daß der Ventilkolben (21) in Schließrichtung durch zwei parallel geschaltete Druckfedern (17, 18) beaufschlagbar ist,
— daß eine der Druckfedern (18) gefesselt ist,
— daß bei gedrosseltem Durchgang nur die ungefesselte Druckfeder (17) wirksam ist und bei ungedrosseltem Durchgang beide Druckfedern (17, 18) wirksam sind und
— daß der Ventilweg (19) des Ventilkolbens (21) aus seiner Ausgangsstellung bis zum Beginn der Kraftwirkung der gefesselten Druckfeder (18) kleiner ist als sein Verstellweg (20) bis zur Öffnung des ungedrosselten Durchgangs zwischen der Druckleitung (3) und der Ablaufleitung (7) (Fig. 2 und 3).

4. Druckregeleinrichtung nach Anspruch 3, dadurch gekennzeichnet, daß die gefesselte Druckfeder (18) zwischen einem an einem unbeweglich angeordneten Kolben (31) angeordneten Bund (30) und einer auf dem Kolben (31) verschiebbaren Büchse (32) eingespannt ist, wobei die Bewegung der Büchse (32) durch einen an dem freien Ende des Kolbens (31) angeordneten Anschlag (Sprengring 33) begrenzt ist.

5. Druckregeleinrichtung nach Anspruch 4, dadurch gekennzeichnet, daß die Drosselstelle als Drosselstufe (35) am dem Ventilkolben (21) ausgebildet ist, die zusammen mit der Ventilbohrung (22) einen Ringspalt (36) bildet.

6. Druckregeleinrichtung nach Anspruch 3, dadurch gekennzeichnet, daß die gefesselte Druckfeder (18) eine größere Federkraft aufweist als die ungefesselte Druckfeder (17).

7. Druckregeleinrichtung nach Anspruch 6, dadurch gekennzeichnet,
— daß der Ventilkolben (21) nur von der Druckfeder (17) mit der kleineren Federkraft in seiner Ausgangsstellung gehalten wird,
— daß in der Ausgangsstellung des Ventilkolbens (21) ein Durchgang von der Druckleitung (3) zu der Ablaufleitung (7) gesperrt ist und
— daß der Ventilkolben (21) bei einer Verschiebung aus seiner Ausgangsstellung gegen die Kraft der Druckfedern (17, 18) zunächst einen Durchgang über den Ringspalt (36) der Drosselstelle öffnet, dann zur Anlage an die gefesselte Druckfeder (18) mit der höheren Federkraft gelangt und erst danach einen ungedrosselten Durchgang freigibt.

## Revendications

1. Dispositif hydraulique de régulation de pression, notamment pour une boîte de vitesses commutable en charge de véhicules à moteur, comportant une pompe à fluide hydraulique (1) et une soupape principale (4) pour régler la pression dans au moins un consommateur à haute pression (6) raccordé à une conduite à haute pression (3) entre la pompe (1) et le soupape principale (4), dans lequel la soupape principale (4), formée par une soupape de limitation de pression, est sollicitée dans le sens de fermeture par un ressort de compression (9) et dans le sens d'ouverture par la pression régnant dans la conduite à haute pression (3), et dans lequel la soupape principale (4) comporte une conduite de sortie (7) menant à au moins un consommateur à basse pression (8), caractérisé:
— en ce qu'une seconde soupape de limitation de pression (11) est branchée en parallèle avec la soupape principale (4),
— en ce que la seconde soupape de limitation de pression (11) est suivie d'un étanglement (13),
— en ce que la seconde soupape de limitation de pression (11) est sollicitée dans le sens de fermeture par un ressort de compression (15) et dans le sens d'ouverture par la pression régnant dans la conduite à haute pression (3), et
— en ce que la pression d'ouverture de la seconde soupape de limitation de pression (11) est inférieure à la pression d'ouverture de la soupape principale (4) (fig. 1).

2. Dispositif de régulation de pression selon la revendication 1, caractérisé en ce que le ressort de compression (9) de la soupape principale (4) est plus fort que le ressort de compression (15) de la seconde soupape de limitation de pression (11).

3. Dispositif hydraulique de régulation de pression, notamment pour une boîte de vitesses commutable en charge de véhicules à moteur, comportant une pompe à fluide hydraulique (1) et une soupape de régulation (4') pour régler la pression dans au moins un consommateur à haute pression (6) raccordé à une conduite à haute pression (3) entre la pompe (1) et la soupape de régulation, dans lequel la soupape de régulation, formée par une soupape de limitation de pression, est sollicitée dans le sens de fermeture par un ressort de compression (17) et dans le sens d'ouverture par la pression régnant dans la conduite à haute pression (3), et dans lequel la soupape de régulation comporte une conduite de sortie (7) menant à au moins un consommateur à basse pression (8), caractérisé:
— en ce q'un piston de soupape (21), coulissant dans un alésage (22) d'un corps (23) de la soupape, est agencé pour commander un passage étranglé par un étranglement (35, 36) et un passage non étranglé, entre la conduite à haute pression (3) et la conduite de sortie (7),
— en ce que le piston de soupape (21) est agencé pour être sollicité dans le sens de fermeture par deux ressorts de compression (17, 18) disposés en parallèle,
— en ce que l'un (18) des ressorts de compression est bridé,
— en ce que seul le ressort non bridé (17) est actif pour le passage étranglé et que les deux ressorts (17, 18) sont actifs pour le passage non étranglé, et
— en ce que la course (19) du piston de soupape (21) entre sa position de repos et la mise en action du ressort bridé (18) est plus petite que sa course (20) jusqu'à l'ouverture du passage non étranglé entre la conduite à haute pression (3) et la conduite de sortie (7) (fig. 2 et 3).

4. Dispositif de régulation de pression selon la revendication 3, caractérisé en ce que le ressort bridé (18) est précomprimé entre un épaulement (30) disposé sur un piston immobile (31) et une douille (32) montée de manière coulissante sur ce piston (31), le mouvement de la douille (32) étant limité par un arrêt (anneau de retenue 33) monté à l'extrémité libre du piston (31).

5. Dispositif de régulation de pression selon la revendication 4, caractérisé en ce que l'étranglement est formé par un redan (35) ménagé sur le piston de soupape (21) et formant une fente annulaire (36) par coopération avec l'alésage (22) de la soupape.

6. Dispositif de régulation de pression selon la revendication 3, caractérisé en ce que le ressort bridé (18) est plus fort que le ressort non bridé (17).

7. Dispositif de régulation de pression selon la revendication 6, caractérisé:
— en ce que le piston de soupape (21) n'est maintenu dans sa position de repos que par le ressort de compression (17) le moins fort,
— en ce qu'un passage entre la conduite à haute pression (3) et la conduite de sortie (7) est bloqué dans la position de repos du piston de soupape (21), et
— en ce que le piston de soupape (21), au cours de son déplacement à partir de sa position de repos à l'encontre de la force des ressorts (17, 18), ouvre d'abord un passage par la fente annulaire (36) de l'étranglement, puis s'appuie sur le ressort bridé (18) qui est plus fort que l'autre, et ne libère qu'ensuite un passage non étranglé.

5

## Claims

1. A hydraulic pressure control device, more particularly for load changing mechanisms in motor vehicles, comprising a pressure medium pump (1) and a main pressure valve (4) for pressure control in at least one high-pressure consumer (6) connected to a pressure line (3) between the pressure medium pump (1) and the main pressure relief valve (4), the main pressure valve (4) designed as a relief valve being acted upon in the direction of closure by a pressure spring (9) and in the direction of opening by the pressure existing in the pressure line (3) and the main pressure valve (4) comprising a discharge line (7) leading to at least one low-pressure consumer (8), characterised in that
— a second relief valve (11) is connected in parallel to the main pressure valve (4),
— a throttle point (13) is connected downstream of the second relief valve (11),
— the second relief valve (11) is acted upon in the direction of closure by a pressure spring (15) and in the direction of opening by the pressure existing in the pressure line (3) and
— the opening pressure of the second relief valve (11) lies below the opening pressure of the main pressure valve (4) (Fig. 1).

2. A pressure control device according to claim 1, characterised in that the pressure spring (9) of the main pressure valve (4) has a greater spring force than the pressure spring (15) of the second relief valve (11).

3. A hydraulic pressure control device, more particularly for load changing mechanisms in motor vehicles, comprising a pressure medium pump (1) and a pressure valve (4) for pressure control in at least one high-pressure consumer (6) connected to a pressure line (3) between the pressure medium pump (1) and the pressure valve, the pressure valve (4) designed as a relief valve being acted upon in the direction of closure by a pressure spring (17) and in the direction of opening by the pressure existing in the pressure line (3) and the pressure valve comprising a discharge line (7) leading to at least one low-pressure consumer (8), characterised in that
— a valve piston (21) which is displaceable in a valve bore (22) of a valve housing (23) is designed so as to control the opening of a passage between the pressure line (3) and the discharge line (7), which passage can be non-throttled or throttled by means of a throttling point (35, 36),
— the valve piston (21) can be acted upon in the direction of closure by two pressure springs (17, 18) connected in parallel,
— one of the pressure springs (18) is fixed in place,
— when the passage is throttled, only the non-fixed pressure spring (17) is effective and when the passage is not throttled both pressure springs (17, 18) are effective and
— the valve path (19) of the valve piston (21) from its starting position to the start of effective force of the fixed pressure spring (18) is shorter than its path of displacement (20) for opening the non-throttled passage between the pressure line (3) and the discharge line (7) (Figs. 2 and 3).

4. A pressure control line according to claim 3, characterised in that the fixed pressure spring (18) is tensioned between a collar (30) arranged on a stationary piston (31) and a bushing (32) which is displaceable on the piston (31), the movement of the bushing (32) being limited by a stop (snap ring 33) arranged on the free end of the piston (31).

5. A pressure control device according to claim 4, characterised in that the throttling point is designed as a throttling step (35) on the valve piston (21), which together with the valve bore (22) forms an annular gap (36).

6. A pressure control device according to claim 3, characterised in that the fixed pressure spring (18) has a greater spring force than the non-fixed pressure spring (17).

7. A pressure control device according to claim 6, characterised in that
— the valve piston (21) is only held in its starting position by the pressure spring (17) having the smaller spring force,
— in the starting position of the valve piston (21), a passage from the pressure line (3) to the discharge line (7) is blocked and
— when the valve piston (21) is displaced from its starting position against the force of the pressure springs (17, 18), said valve piston (21) firstly opens a passage via the annular gap (36) of the throttling point, subsequently comes to rest against the fixed pressure spring (18) having the greater spring force and only then releases a non-throttled passage.

EP 0 356 441 B1

FIG.1

FIG.2

FIG.3